# EUROPÄISCHE PATENTSCHRIFT

(11) **EP 3 060 424 B1**
(45) Veröffentlichungstag und Bekanntmachung des Hinweises auf die Patenterteilung: **30.08.2017**
(21) Anmeldenummer: 14786688.3
(22) Anmeldetag: 22.10.2014
(51) Int. Cl.: B60N 2/015, B60N 2/44

(54) **VERRIEGELUNGSANZEIGE FÜR EINEN FAHRZEUGSITZ, FAHRZEUGSITZ, KRAFTFAHRZEUG UND VERFAHREN ZUM VERRIEGELN EINES FAHRZEUGSITZES**
LOCKING INDICATOR FOR A VEHICLE SEAT, VEHICLE SEAT, MOTOR VEHICLE, AND METHOD FOR LOCKING A VEHICLE SEAT
INDICATEUR DE VERROUILLAGE POUR SIÈGE DE VÉHICULE, SIÈGE DE VÉHICULE, VÉHICULE AUTOMOBILE ET PROCÉDÉ DE VERROUILLAGE D'UN SIÈGE D'AUTOMOBILE

(30) Priorität: 23.10.2013 DE 102013221540
(43) Veröffentlichungstag der Anmeldung: 31.08.2016
(73) Patentinhaber: Volkswagen Aktiengesellschaft, 38440 Wolfsburg (DE)
(72) Erfinder: KONDO, Kossi, 38547 Calberlah (DE); DÄNEKAS, Lars, 38527 Meine-Grassel (DE); KNEBEL, Lutz, 57319 Bad Berleburg (DE)
(86) Internationale Anmeldenummer: PCT/EP2014/072612
(87) Internationale Veröffentlichungsnummer: WO 2015/059173

(56) Entgegenhaltungen:
- DE-A1- 10 163 611
- DE-A1-102011 018 330
- US-A1- 2013 221 726

## Beschreibung

Die Erfindung betrifft eine Verriegelungsanzeige für einen Fahrzeugsitz, einen Fahrzeugsitz, ein Kraftfahrzeug mit mindestens einem Sitz sowie ein Verfahren zum Verriegeln eines Fahrzeugsitzes.

Klappbare oder herausnehmbare Sitze in Fahrzeugen haben Verriegelungen zum Beispiel für die Rückenlehne oder für den kompletten Sitz beziehungsweise die Sitzbank. Für die Kontrolle der korrekten Verriegelung sind Verriegelungsanzeigen vorgesehen.

DE 693 28 236 T2 beschreibt ein automatisches Verriegelungselement für einen herausnehmbaren Fahrzeugsitz mit einem Kugelstiftriegel mit zwei Anschlägen zur Darstellung der Verriegelung.

DE 10 2004 053 811 A1 beschreibt eine Verriegelungsvorrichtung für einen abnehmbaren Fahrzeugsitz mit zwei Befestigungspunkten an der Karosserie, wobei eine Anzeige für einen Verriegelungszustand für die hintere Endverriegelung vorgesehen ist.

Die DE 10 2011 018 330 A1 beschreibt eine Betätigungseinheit für einen Fahrzeugsitz mit mehreren Verriegelungselementen aufweisend eine Anzeigeöffnung mit darin sichtbarer Statusanzeige.

Der Erfindung liegt nun die Aufgabe zugrunde, die Verriegelung von Fahrzeugsitzen, insbesondere die Anzeige der Verriegelung, zu verbessern.

Diese Aufgabe wird gelöst mit einer Verriegelungsanzeige gemäß Anspruch 1, einem Fahrzeugsitz nach Anspruch 8, einem Kraftfahrzeug nach Anspruch 9 sowie einem Verfahren zur Verriegelung nach Anspruch 10.

Die erfindungsgemäße Verriegelungsanzeige für einen Fahrzeugsitz mit mehreren Verriegelungselementen aufweisend eine Anzeigeöffnung mit darin sichtbarer Statusanzeige umfasst für jedes Verriegelungselement jeweils eine Statusanzeige mit einem Anzeigeteil für die Nichtverriegelung des Verriegelungselements, wobei zumindest ein Teil des Anzeigeteils bei nicht verriegeltem Verriegelungselement sichtbar im Bereich der Anzeigeöffnung angeordnet ist und wobei die Anzeigeteile nicht verriegelter Verriegelungselemente sich zumindest teilweise überdecken.

Die erfindungsgemäße Verriegelungsanzeige hat den Vorteil, dass die Verriegelung mehrerer Verriegelungen oder Verriegelungselemente direkt sichtbar gemacht werden kann, ohne dass eine Selbstkontrolle des Benutzers erforderlich ist. Die Verriegelungsanzeige kann dabei Lehnenverriegelungen und/oder Verriegelungen des Sitzunterbaus, das heißt der Befestigung mit der Karosserie darstellen. Dabei werden mehrere, zum Beispiel zwei bis fünf, vorzugsweise zwei, Verriegelungen in nur einer Anzeige oder Anzeigeöffnung dargestellt, was leicht prüfbar ist und dadurch die Sicherheit erhöht. Realisiert wird diese Anzeige durch sich überdeckende Anzeigen oder Anzeigeteile für die einzelnen Verriegelungen, was die Sicherheit durch die Redundanz der Anzeige erhöht.

In bevorzugter Ausgestaltung der Erfindung ist vorgesehen, dass zumindest eine Statusanzeige ein zusätzliches Anzeigeteil für die Verriegelung des Verriegelungselements aufweist. Das zusätzliche Anzeigeteil kann alternativ an einem anderen Teil der Verriegelungsanzeige oder des Sitzes angeordnet sein. Das zusätzliche Anzeigeteil für eine vollständige Verbindung aller Verriegelungen ist nur dann sichtbar, wenn alle Anzeigeteile für eine Nichtverrieglung aus der Anzeigeöffnung bewegt worden sind.

In weiterer bevorzugter Ausgestaltung der Erfindung ist vorgesehen, dass das Anzeigeteil und das zusätzliche Anzeigeteil unterschiedliche Farben aufweisen. Durch diese Farbkodierung, zum Beispiel Grün für verriegelt und Rot für nicht verriegelt, ist auf einen Blick eine sichere Information des Benutzers gewährleistet.

Besonders vorteilhaft ist, dass die Statusanzeige mit einer Feder derart vorgespannt ist, dass das Anzeigeteil für die Nichtverriegelung sichtbar im Bereich der Anzeigeöffnung angeordnet ist. Dies erhöht die Sicherheit weiterhin, da eine Verrieglung nur dann angezeigt wird, wenn die Verriegelung, entgegen der Federkraft, stattgefunden hat.

Das Anzeigeteil für die Nichtverriegelung kann bei verriegeltem Verriegelungselement außerhalb des Bereiches der Anzeigeöffnung angeordnet sein. Damit ist dieses garantiert nicht mehr sichtbar, was die Sicherheit und Zuverlässigkeit erhöht.

Vorzugsweise ist die Statusanzeige mit einem Übertragungselement für die Betätigung des Verriegelungselements gekoppelt. Dies erlaubt einen robusten und kostengünstigen Aufbau.

Das Übertragungselement kann einen Seilzug mit einem Mitnahmekörper aufweisen und die Statusanzeige kann für eine Bewegung des Anzeigeteils durch den Mitnahmekörper mitnehmbar sein. Diese robuste Ausführung erlaubt eine einfache Integration in bestehende Systeme.

Der erfindungsgemäße Fahrzeugsitz mit einem oder mehreren Verriegelungsmechanismen mit mehreren Verriegelungselementen und mit einer Anzeigeöffnung mit darin sichtbarer Statusanzeige umfasst eine Verriegelungsanzeige wie zuvor beschrieben. Es gelten die gleichen Vorteile und Modifikationen. Die Integration der Verriegelungsanzeige in den Sitz, vorzugsweise in unmittelbarer Nähe zu einem Betätigungselement der Verriegelung, erlaubt eine direkte Sichtkontrolle durch den Benutzer.

Das erfindungsgemäße Kraftfahrzeug umfasst mindestens einen Sitz wie zuvor beschrieben. Es gelten die gleichen Vorteile und Modifikationen. Dabei kann auch vorgesehen sein, dass mehrere Sitze beispielsweise einer Sitzbank eine oder mehrere gemeinsame Verriegelungen und/oder Verriegelungsanzeigen haben.

Das erfindungsgemäße Verfahren zum Verriegeln eines Fahrzeugsitzes mit mehreren Verriegelungselementen umfasst die Schritte:
- Verriegeln eines ersten Verriegelungselements;
- Bewegen eines Anzeigeteils für die Nichtverriegelung des ersten Verriegelungselements aus einer Anzeigeöffnung;
- Verriegeln der weiteren Verriegelungselemente;
- Bewegen weiterer Anzeigeteile für die Nichtverriegelung der weiteren Verriegelungselemente aus der Anzeigeöffnung; und
- Anzeigen eines zusätzlichen Anzeigeteils für die Verriegelung, wenn alle Anzeigeteile für die Nichtverriegelung aus der Anzeigeöffnung bewegt sind.

Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Seitenansicht eines Sitzes mit Sitzverriegelung;
- Figur 2: eine Verriegelungsanzeige darstellend einen nicht verriegelten Zustand;
- Figur 3: eine Verriegelungsanzeige darstellend einen weiteren nicht verriegelten Zustand;
- Figur 4: eine Verriegelungsanzeige darstellend noch einen weiteren nicht verriegelten Zustand; und
- Figur 5: eine Verriegelungsanzeige darstellend einen verriegelten Zustand.

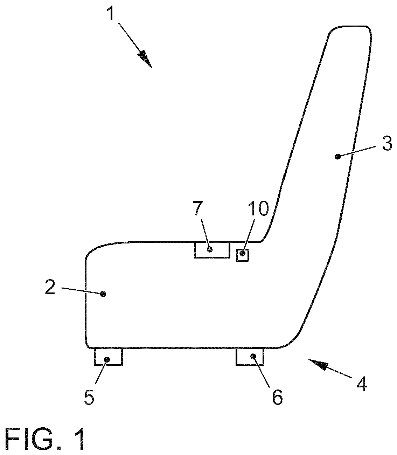

Figur 1 zeigt in beispielhafter Darstellung einen Fahrzeugsitz 1 mit einem Sitzteil 2 und einer Rückenlehne 3. Der Fahrzeugsitz 1 hat eine Verriegelung oder Verriegelungsvorrichtung 4 mit einem ersten Verriegelungselement 5 und einem zweiten Verriegelungselement 6. Die beiden Verriegelungselemente 5 und 6 dienen dazu, den Fahrzeugsitz 1 an einer Karosserie eines Fahrzeugs zu befestigen.

Die beiden Verriegelungselemente 5 und 6 werden mit einem Betätigungshebel 7 betätigt. Der Betätigungshebel 7 kann auf beide Verriegelungselemente 5 und 6 wirken. Alternativ kann vorgesehen sein, zwei Betätigungshebel 7 vorzusehen. Der Fahrzeugsitz 1 kann mehrere Verriegelungsvorrichtungen oder Verriegelungsmechanismen aufweisen, beispielsweise einen weiteren für die Sitzlehne 3.

In unmittelbarer Nähe oder direkt neben dem Betätigungshebel 7 ist eine Verriegelungsanzeige 10 angeordnet. Die Verriegelungsanzeige 10 ist für einen Benutzer des Fahrzeugsitzes 1, das heißt für eine Person, welche den Sitz verriegelt oder entriegelt. Das Verriegeln oder Entriegeln des Fahrzeugsitzes 1 kann vorgenommen werden, um den Fahrzeugsitz 1 aus dem Fahrzeug zu entfernen beziehungsweise ihn in dem Fahrzeug zu montieren oder um den Fahrzeugsitz 1 anzupassen, beispielsweise durch eine Verstellung der Sitzlehne 3, eine Klappfunktion des Sitzes oder der Sitzbank für den Ein- oder Ausstieg eines Insassen oder eine Veränderung der Position des Fahrzeugsitzes 1.

Die Verriegelungsanzeige 10 informiert den Benutzer dann über den Status oder Zustand der Verriegelung. Dem Benutzer werden die Zustände Verriegelung und keine Verriegelung visualisiert. Somit erhält der Benutzer neben einer eventuellen haptischen Rückmeldung eine optische Rückmeldung über den Verriegelungszustand des Fahrzeugsitzes 1.

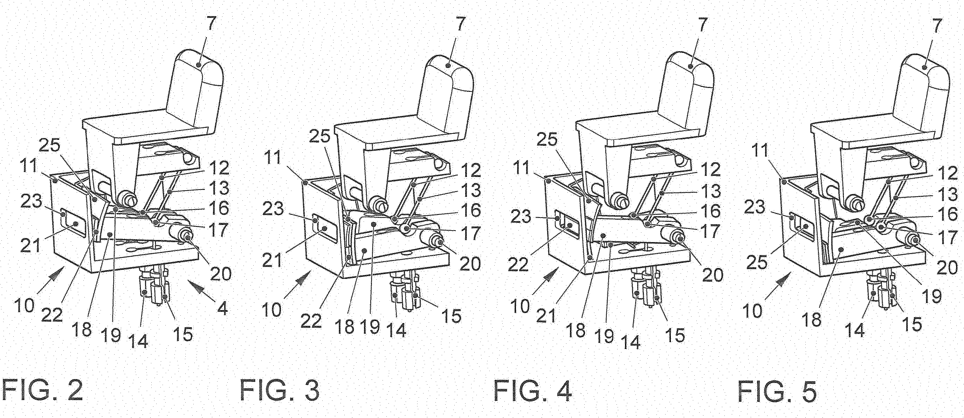

Im Folgenden wird anhand der Figuren 2 bis 5 ein beispielhaftes Ausführungsbeispiel der Verriegelungsanzeige 10 beschrieben.

Die Figuren 2 bis 5 zeigen einen Teil des Fahrzeugsitzes 1, insbesondere ein Gehäuse oder eine Abdeckung 11. An dem Gehäuse 11 ist schwenkbar ein Betätigungshebel 7 der Verriegelungsvorrichtung 4 befestigt. Der Betätigungshebel 7 kann ebenso wie die gesamte Verriegelungsvorrichtung 4 dem Fahrzeugsitz 1 zugeordnet sein. An dem Betätigungshebel 7 sind ein erstes Übertragungselement 12 und ein zweites Übertragungselement 13, beide in Form von Bowdenzügen oder Seilzügen, befestigt. Das erste Übertragungselement 12 dient zur Kraftübertragung von dem Betätigungshebel 7 zu dem ersten Verriegelungselement 5. Entsprechend dient das zweite Übertragungselement 13 zur Kraftübertagung von dem Betätigungshebel 7 zu dem zweiten Verriegelungselement 6. Die beiden Übertragungselemente 12 und 13 können eine Zugkraft übertragen. Ist für die Betätigung der Verriegelungselemente 5 und 6 eine Druckkraft erwünscht oder erforderlich, können statt der gezeigten Bowdenzüge zum Beispiel Gestänge oder beispielsweise pneumatische oder hydraulische Druckschläuche verwendet werden.

Unterhalb eines Gehäuseteils sind zwei Führungen 14 und 15 für die beiden Übertragungselemente 12 und 13 angeordnet. Die durch die beiden Führungen 14, 15 verlaufenden Übertragungselemente 12 und 13 können durch die Führungen 14, 15 vorgespannt und/oder eingestellt werden.

Die beiden Übertragungselemente 12 und 13 sind an dem Betätigungshebel 7 verankert, so dass bei einer Betätigung des Hebels 7, hier in einer Richtung entgegen dem Uhrzeigersinn, Zug auf die beiden Übertragungselemente 12 und 13 beziehungsweise Verbindungselemente ausgeübt wird, wodurch die beiden Verriegelungselemente 5 und 6 bewegt werden.

An dem ersten Übertragungselement 12 und an dem zweiten Übertragungselement 13 sind ein erster Mitnahmekörper 16 und ein zweiter Mitnahmekörper 17 derart befestigt, dass sie bei einer Bewegung der Übertragungselemente 12 und 13 mitbewegt werden. Die Mitnahmekörper oder Mitnahmeelemente 16 und 17 können einstückig mit den Übertragungselementen 12, 13 ausgebildet sein oder an ihnen befestigt sein.

Die Verriegelungsanzeige 10 umfasst eine erste Statusanzeige 18 und eine zweite Statusanzeige 19, die schwenkbar auf einer Drehachse 20 angeordnet sind. Die beiden Statusanzeigen 18 und 19 haben die Form eines Hebels und wirken jeweils mit dem ersten Mitnahmekörper 16 beziehungsweise mit dem zweiten Mitnahmekörper 17 zusammen. Dies bedeutet, dass die Statusanzeigen 18 und 19 an einem mittleren Bereich des Hebels eine Durchgangsöffnung für das erste Übertragungselement 12 beziehungsweise das zweite Übertragungselement 13 haben, wobei diese Durchgangsöffnungen derart bemessen sind, dass der erste Mitnahmekörper 16 beziehungsweise der zweite Mitnahmekörper 17 größer sind als diese Durchgangsöffnungen. Dies führt dazu, dass die Statusanzeigen 18 und 19 mittels der Mitnahmekörper 16 und 17 bei einer nach unten gerichteten Zugbewegung des Übertragungselements 12 beziehungsweise des Übertragungselements 13 ebenfalls nach unten beziehungsweise in einer Drehbewegung um die Drehachse 20 entgegen dem Uhrzeigersinn bewegt werden.

An dem anderen Ende des Hebels, also gegenüberliegend der Drehachse 20, weist die erste Statusanzeige 18 ein erstes Anzeigeteil 21 auf. Entsprechend weist die zweite Statusanzeige 19 ein zweites Anzeigeteil 22 auf.

In dem Gehäuse 11 ist eine Anzeigeöffnung 23 vorgesehen, in welcher die Anzeigeteile 21, 22 beziehungsweise Teile davon für den Benutzer der Verriegelungsvorrichtung 4 sichtbar sind. Die Längen ab der Drehachse 20 der ersten Statusanzeige 18 und der zweiten Statusanzeige 19 sind derart bemessen, dass die erste Statusanzeige 18 eine größere Länge als die zweite Statusanzeige 19 hat. Dies führt dazu, dass das erste Anzeigeteil 21 vor dem zweiten Anzeigeteil 22 angeordnet ist. Dies bedeutet, dass ein Benutzer, der auf die Anzeigeöffnung 23 blickt, in dem in Figur 2 dargestellten Zustand der Verriegelungsanzeige 10 auf das erste Anzeigeteil 21 blickt, während das zweite Anzeigeteil 22 hinter dem Anzeigeteil 21 liegt. Das erste und zweite Anzeigeteil 21 beziehungsweise 22 können eine rote Farbe aufweisen, da sie eine Nichtverriegelung des Verriegelungselements 5 beziehungsweise 6 anzeigen. Die erste Statusanzeige 18 und die zweite Statusanzeige 19 sind mit einer oder mehreren Federn 24 derart vorgespannt, dass das erste Anzeigeteil 21 und das zweite Anzeigeteil 22 im Bereich der Anzeigeöffnung 23 angeordnet sind.

Die zweite Statusanzeige 19 weist neben dem zweiten Anzeigeteil 22 ein sich daran anschließendes zusätzliches Anzeigeteil 25 auf. Das zusätzliche Anzeigeteil 25 zeigt die Verriegelung des zweiten Verriegelungselements 6 an. Das zusätzliche Anzeigeteil 25 kann auch ortsfest an dem Gehäuse 11 befestigt sein. Das zusätzliche Anzeigeteil 25 ist aus Sicht der Anzeigeöffnung 23 hinter dem ersten Anzeigeteil 21 und gegebenenfalls auch hinter dem zweiten Anzeigeteil 22 angeordnet. Wenn mehrere Verriegelungselemente beziehungsweise Statusanzeigen beziehungsweise Anzeigeteile, das heißt mehr als die zwei dargestellten, vorhanden sind, sind diese ebenfalls hintereinander angeordnet, wobei das zusätzliche Anzeigeteil 25 die letzte Position einnimmt. Damit ist sichergestellt, dass dem Benutzer eine korrekte Verriegelung, angezeigt durch das zusätzliche Anzeigeteil 25, erst angezeigt wird, nachdem sämtliche Anzeigeteile, anzeigend jeweils eine Nichtverriegelung eines Verriegelungselements, aus der Anzeigeöffnung 23 bewegt worden sind. Ist auch nur eines der Verriegelungselemente 5 und 6 nicht korrekt verriegelt, ist das zusätzliche Anzeigeteil 25 in der Anzeigeöffnung 23 nicht zu sehen, da es von einem Anzeigeteil verdeckt ist.

Hier werden die Anzeigeteile 21 und 22 und auch das zusätzliche Anzeigeteil 25 rotatorisch im Bereich der Anzeigeöffnung 23 bewegt und die Anzeigeteile 21 und 22 sind hintereinander angeordnet. Ebenso ist es möglich, dass die Anzeigeteile 21 und 22 translatorisch im Bereich der Anzeigeöffnung 23 bewegt werden und dann gegebenenfalls nebeneinander oder übereinander angeordnet sind.

Im Folgenden wird anhand der Figuren 2 bis 5 das Verriegeln beziehungsweise Entriegeln des Fahrzeugsitzes 1 beschrieben.

In dem in Figur 2 dargestellten Zustand sind sowohl das erste Verriegelungselement 5 als auch das zweite Verriegelungselement 6 offen, das heißt nicht verriegelt. Entsprechend stehen das erste Übertragungselement 12 und das zweite Übertragungselement 13 nicht unter Zug, so dass der erste Mitnahmekörper 16 und der zweite Mitnahmekörper 17 nicht auf die erste Statusanzeige 18 und die zweite Statusanzeige 19 einwirken. Dadurch werden das erste Anzeigeteil 21 und das zweite Anzeigeteil 22 durch die Federkraft der Feder 24 im Bereich der Anzeigeöffnung 23 gehalten. Dies bedeutet, dass der Benutzer mit Blick auf die Anzeigeöffnung 23 den Zustand der Nichtverriegelung visualisiert bekommt, beispielsweise durch eine rote Farbe des ersten Anzeigeteils 21, welches das zweite Anzeigeteil 22 verdeckt.

In den Figuren 3 und 4 sind Zustände der Verriegelungsanzeige 10 und damit der Verriegelungsvorrichtung 4 dargestellt, in denen jeweils eine der beiden Verriegelungen geschlossen und die andere der beiden Verriegelungen offen ist. Für den auf die Anzeigeöffnung 23 blickenden Benutzer ändert sich damit nichts, er sieht beide Male ein Anzeigeteil, das die Nichtverriegelung visualisiert. In Figur 3 ist die zweite Verriegelung 6 geschlossen, was dazu führt, dass die zweite Statusanzeige 19 von dem Mitnehmer 17 entgegen der Federkraft nach unten gedrückt wird, da durch die geschlossene Verriegelung das zweite Übertragungselement 13 unter Spannung steht. Dies bewirkt, dass im Hintergrund des ersten Anzeigeteils 21 das zweite Anzeigeteil 22 aus dem Bereich der Anzeigeöffnung 23 geschwenkt wird. Stattdessen wird das zusätzliche Anzeigeteil 25 in den Bereich der Anzeigeöffnung 23 geschwenkt. Das zusätzliche Anzeigeteil 25 ist jedoch für den Benutzer nicht sichtbar, da das erste Anzeigeteil 21 noch sichtbar im Bereich der Anzeigeöffnung 23 ist.

In Figur 4 ist der Zustand dargestellt, in dem das zweite Verriegelungselement 6 offen bleibt, das erste Verriegelungselement 5 jedoch geschlossen ist. Dies führt dazu, dass das erste Anzeigeteil 21 durch die Zugkraft des ersten Übertragungselements 12, übertragen durch den ersten Mitnahmekörper 16, und die erste Statusanzeige 18 aus dem Bereich der Anzeigeöffnung 23 geschwenkt wird. Dort bleibt das zweite Anzeigeteil 22 sichtbar, eine Nichtverriegelung des Fahrzeugsitzes 1 anzeigend.

In Figur 5 ist nun der vollständig verriegelte Zustand des Fahrzeugsitzes 1 dargestellt. Beide Verriegelungselemente 5 und 6 sind verriegelt. Ausgehend von Figur 2 waren dazu die beiden in den Figuren 3 und 4 dargestellten Verriegelungsschritte mit jeweils entsprechender Bewegung des Anzeigeteils aus dem Bereich der Anzeigeöffnung erforderlich. In Figur 5 ist nun das zusätzliche Anzeigeteil 25 im Bereich der Anzeigeöffnung 23 für den Benutzer sichtbar, was eine vollständige Verriegelung des Fahrzeugsitzes 1 anzeigt. Das erste Anzeigeteil 21 und das zweite Anzeigeteil 22 befinden sich in der nicht sichtbaren Position außerhalb der Anzeigeöffnung 23. Die beiden Anzeigeteile 21 und 22 sind hintereinander angeordnet.

Da die beiden Verriegelungselemente 5 und 6 eingerastet sind, stehen die beiden Übertragungselemente 12 und 13 unter Spannung, wodurch die beiden Statusanzeigen 18 und 19 in der gezeigten Position gehalten werden. Für eine Entriegelung des Fahrzeugsitzes 1 wird der Betätigungshebel 7 entgegen dem Uhrzeigersinn bewegt, wodurch die beiden Verriegelungselemente 5 und 6 wieder gelöst werden. Eine erneute Verriegelung des Fahrzeugsitzes 1 wird durch händisches Einrasten oder Verbinden der beiden Verriegelungselemente 5 und 6 erreicht. Dabei bewegen sich, wie oben beschrieben, die erste Statusanzeige 18 und die zweite Statusanzeige 19 entsprechend mit, was dem Benutzer in der Anzeigeöffnung 23 visualisiert wird.

### Bezugszeichenliste

- 1: Fahrzeugsitz
- 2: Sitzteil
- 3: Sitzlehne
- 4: Verriegelungsvorrichtung
- 5: erstes Verriegelungselement
- 6: zweites Verriegelungselement
- 7: Betätigungshebel
- 10: Verriegelungsanzeige
- 11: Gehäuse
- 12: erstes Übertragungselement
- 13: zweites Übertragungselement
- 14: erste Führung
- 15: zweite Führung
- 16: erster Mitnahmekörper
- 17: zweiter Mitnahmekörper
- 18: erste Statusanzeige
- 19: zweite Statusanzeige
- 20: Drehachse
- 21: erstes Anzeigeteil
- 22: zweites Anzeigeteil
- 23: Anzeigeöffnung
- 24: Feder
- 25: zusätzliches Anzeigeteil

## Patentansprüche

1. Verriegelungsanzeige (10) für einen Fahrzeugsitz (1) mit mehreren Verriegelungselementen (5, 6) aufweisend eine Anzeigeöffnung (23) mit darin sichtbarer Statusanzeige, **dadurch gekennzeichnet, dass** für jedes Verriegelungselement (5, 6) jeweils eine Statusanzeige (18, 19) mit einem Anzeigeteil (21, 22) für die Nichtverriegelung des Verriegelungselements (5, 6) vorgesehen ist, und dass zumindest ein Teil des Anzeigeteils (21, 22) bei nicht verriegeltem Verriegelungselement (5, 6) sichtbar im Bereich der Anzeigeöffnung (23) angeordnet ist, wobei die Anzeigeteile (21, 22) nicht verriegelter Verriegelungselemente (5, 6) sich zumindest teilweise überdecken.

2. Verriegelungsanzeige nach Anspruch 1, **dadurch gekennzeichnet, dass** zumindest eine Statusanzeige (18, 19) ein zusätzliches Anzeigeteil (25) für die Verriegelung des Verriegelungselements (5, 6) aufweist.

3. Verriegelungsanzeige nach Anspruch 2, **dadurch gekennzeichnet, dass** das Anzeigeteil (21, 22) und das zusätzliche Anzeigeteil (25) unterschiedliche Farben aufweisen.

4. Verriegelungsanzeige nach einem der vorhergehenden Ansprüche, **dadurch gekennzeichnet, dass** die Statusanzeige (18, 19) mit einer Feder (24) derart vorgespannt ist, dass das Anzeigeteil (21, 22) für die Nichtverriegelung sichtbar im Bereich der Anzeigeöffnung (23) angeordnet ist.

5. Verriegelungsanzeige nach einem der vorhergehenden Ansprüche, **dadurch gekennzeichnet, dass** das Anzeigeteil (21, 22) für die Nichtverriegelung bei verriegeltem Verriegelungselement (5, 6) außerhalb des Bereiches der Anzeigeöffnung (23) angeordnet ist.

6. Verriegelungsanzeige nach einem der vorhergehenden Ansprüche, **dadurch gekennzeichnet, dass** die Statusanzeige (18, 19) mit einem Übertragungselement (12, 13) für die Betätigung des Verriegelungselements (5, 6) gekoppelt ist.

7. Verriegelungsanzeige nach Anspruch 6, **dadurch gekennzeichnet, dass** das Übertragungselement (12, 13) einen Seilzug mit einem Mitnahmekörper (16, 17) aufweist und dass die Statusanzeige (18, 19) für eine Bewegung des Anzeigeteils (21, 22) durch den Mitnahmekörper (16, 17) mitnehmbar ist.

8. Fahrzeugsitz mit einem oder mehreren Verriegelungsmechanismen (4) mit mehreren Verriegelungselementen (5, 6) und mit einer Anzeigeöffnung (23) mit darin sichtbarer Statusanzeige, **gekennzeichnet durch** eine Verriegelungsanzeige (10) nach einem der vorhergehenden Ansprüche.

9. Kraftfahrzeug mit mindestens einem Sitz (1) nach Anspruch 8.

10. Verfahren zum Verriegeln eines Fahrzeugsitzes mit mehreren Verriegelungselementen, **gekennzeichnet durch** die Schritte:
- Verriegeln eines ersten Verriegelungselements (5, 6);
- Bewegen eines Anzeigeteils (21, 22) für die Nichtverriegelung des ersten Verriegelungselements (5, 6) aus einer Anzeigeöffnung (23);
- Verriegeln der weiteren Verriegelungselemente (6, 5);
- Bewegen weiterer Anzeigeteile (22, 21) für die Nichtverriegelung der weiteren Verriegelungselemente (6, 5) aus der Anzeigeöffnung (23); und
- Anzeigen eines zusätzlichen Anzeigeteils (21, 22) für die Verriegelung, wenn alle Anzeigeteile (21, 22) für die Nichtverriegelung aus der Anzeigeöffnung (23) bewegt sind, wobei die Anzeigenteile nicht verriegelter Verriegelungselemente sich zumindest teilweise überdecken.

## Claims

1. Locking indicator (10) for a vehicle seat (1) with a plurality of locking elements (5, 6), having an indicator opening (23) with a status indicator visible therein, **characterized in that** a respective status indicator (18, 19) having an indicator part (21, 22) for the non-locked state of the locking element (5, 6) is provided for each locking element (5, 6), and **in that**, when a locking element (5, 6) is not locked, at least a part of the indicator part (21, 22) is arranged visibly in the region of the indicator opening (23), wherein the indicator parts (21, 22) of non-locked locking elements (5, 6) at least partially overlap.

2. Locking indicator according to Claim 1, **characterized in that** at least one status indicator (18, 19) has an additional indicator part (25) for the locked state of the locking element (5, 6).

3. Locking indicator according to Claim 2, **characterized in that** the indicator part (21, 22) and the additional indicator part (25) have different colours.

4. Locking indicator according to one of the preceding claims, **characterized in that** the status indicator (18, 19) is prestressed with a spring (24) in such a manner that the indicator part (21, 22) for the non-locked state is arranged visibly in the region of the indicator opening (23).

5. Locking indicator according to one of the preceding claims, **characterized in that**, when a locking element (5, 6) is locked, the indicator part (21, 22) for the non-locked state is arranged outside the region of the indicator opening (23).

6. Locking indicator according to one of the preceding claims, **characterized in that** the status indicator (18, 19) is coupled to a transmission element (12, 13) for the actuation of the locking element (5, 6).

7. Locking indicator according to Claim 6, **characterized in that** the transmission element (12, 13) has a cable pull with a carry-along body (16, 17), and **in that** the status indicator (18, 19) for a movement of the indicator part (21, 22) can be carried along by the carry-along body (16, 17).

8. Vehicle seat with one or more locking mechanisms (4) with a plurality of locking elements (5, 6) and with an indicator opening (23) with a status indicator visible therein, **characterized by** a locking indictor (10) according to one of the preceding claims.

9. Motor vehicle with at least one seat (1) according to Claim 8.

10. Method for locking a vehicle seat with a plurality of locking elements, **characterized by** the steps:
- locking a first locking element (5, 6);
- moving an indicator part (21, 22) for the non-locked state of the first locking element (5, 6) out of an indicator opening (23);
- locking the further locking elements (6, 5);
- moving further indicator parts (22, 21) for the non-locked state of the further locking elements (6, 5) out of the indicator opening (23); and
- displaying an additional indicator part (21, 22) for the locked state if all of the indicator parts (21, 22) for the non-locked state are moved out of the indicator opening (23), wherein the indicator parts of non-locked locking elements at least partially overlap.

## Revendications

1. Indicateur de verrouillage (10) pour un siège de véhicule (1) comportant plusieurs éléments de verrouillage (5, 6) présentant une ouverture d'indicateur (23) avec un indicateur de statut visible dans celle-ci, **caractérisé en ce qu'**il est prévu pour chaque élément de verrouillage (5, 6) respectivement un indicateur de statut (18, 19) avec une partie d'indicateur (21, 22) pour le non-verrouillage de l'élément de verrouillage (5, 6), et **en ce qu'**au moins une partie de la partie d'indicateur (21, 22) est disposée de façon visible dans l'ouverture d'indicateur (23) lorsque l'élément (5, 6) de verrouillage n'est pas verrouillé, dans lequel les parties d'indicateur (21, 22) des éléments de verrouillage non verrouillés (5, 6) se recouvrent au moins en partie.

2. Indicateur de verrouillage selon la revendication 1, **caractérisé en ce qu'**au moins un indicateur de statut (18, 19) présente une partie d'indicateur supplémentaire (25) pour le verrouillage de l'élément de verrouillage (5, 6).

3. Indicateur de verrouillage selon la revendication 2, **caractérisé en ce que** la partie d'indicateur (21, 22) et la partie d'indicateur supplémentaire (25) présentent des couleurs différentes.

4. Indicateur de verrouillage selon l'une quelconque des revendications précédentes, **caractérisé en ce que** l'indicateur de statut (18, 19) est précontraint avec un ressort (24), de telle manière que la partie d'indicateur (21, 22) pour le non-verrouillage soit disposée de façon visible dans la région de l'ouverture d'indicateur (23).

5. Indicateur de verrouillage selon l'une quelconque des revendications précédentes, **caractérisé en ce que** la partie d'indicateur (21, 22) pour le non-verrouillage est disposée à l'extérieur de la région de l'ouverture d'indicateur (23) lorsque l'élément de verrouillage (5, 6) est verrouillé.

6. Indicateur de verrouillage selon l'une quelconque des revendications précédentes, **caractérisé en ce que** l'indicateur de statut (18, 19) est couplé à un élément de transmission (12, 13) pour l'actionnement de l'élément de verrouillage (5, 6).

7. Indicateur de verrouillage selon la revendication 6, **caractérisé en ce que** l'élément de transmission (12, 13) présente un câble Bowden avec un corps d'entraînement (16, 17) et **en ce que** l'indicateur de statut (18, 19) peut être entraîné pour un mouvement de la partie d'indicateur (21, 22) par le corps d'entraînement (16, 17).

8. Siège de véhicule avec un ou plusieurs mécanisme(s) de verrouillage (4) avec plusieurs éléments de verrouillage (5, 6) et avec une ouverture d'indicateur (23) avec un indicateur de statut visible dans celle-ci, **caractérisé par** un indicateur de verrouillage (10) selon l'une quelconque des revendications précédentes.

9. Véhicule automobile avec au moins un siège (1) selon la revendication 8.

10. Procédé de verrouillage d'un siège de véhicule avec plusieurs éléments de verrouillage, **caractérisé par** les étapes suivantes:
- verrouillage d'un premier élément de verrouillage (5, 6) ;
- déplacement d'une partie d'indicateur (21, 22) pour le non-verrouillage du premier élément de verrouillage (5, 6) hors d'une ouverture d'indicateur (23) ;
- verrouillage des autres éléments de verrouillage (6, 5) ;
- déplacement d'autres parties d'indicateur (22, 21) pour le non-verrouillage des autres éléments de verrouillage (6, 5) hors de l'ouverture d'indicateur (23); et
- indication d'une partie d'indicateur supplémentaire (21, 22) pour le verrouillage lorsque toutes les parties d'indicateur (21, 22) pour le non-verrouillage sont déplacées hors de l'ouverture d'indicateur (23), dans lequel les parties d'indicateur d'éléments de verrouillage non verrouillés se recouvrent au moins en partie.
